# EUROPÄISCHE PATENTSCHRIFT

(11) **EP 1 544 379 B1**
(45) Veröffentlichungstag und Bekanntmachung des Hinweises auf die Patenterteilung: **02.04.2014**
(21) Anmeldenummer: 04103555.1
(22) Anmeldetag: 26.07.2004
(51) Int. Cl.: F16B 7/04, E04G 17/02, E04G 17/04, F16B 2/06

(54) **Klemmvorrichtung**
Clamping device
Dispositif de serrage

(30) Priorität: 19.12.2003 DE 10359761
(43) Veröffentlichungstag der Anmeldung: 22.06.2005
(73) Patentinhaber: Friedr. Ischebeck GmbH, D-58256 Ennepetal (DE)
(72) Erfinder:
(74) Vertreter: Brötz, Helmut

(56) Entgegenhaltungen:
- DE-A1- 3 148 217
- DE-A1- 4 303 935
- DE-C1- 19 802 859
- DE-U1- 8 700 359
- JP-A- 2000 161 317

## Beschreibung

Die vorliegende Erfindung betrifft eine Klemmvorrichtung, insbesondere zur Befestigung von Trägern für den Schalungsbau, aufweisend ein Umgreifelement zum zumindest bereichsweisen Umgreifen eines ersten Trägers und ein Andrückelement zum Andrücken eines zweiten Trägers gegen den ersten Träger in einer Andrückrichtung, eine Längsführung, mittels der das Umgreifelement und das Andrückelement bezüglich der Andrückrichtung mit zueinander variablem Abstand gehalten sind, und mit einer Längsverstelleinrichtung,aufweisend ein den Abstand in Andrückrichtung von Umgreifelement und Andrückelement begrenzendes Spannelement, das entlang der Längsverstelleinrichtung unter Bereitstellung einer Andrückkraft verstellbar ist, wobei die Klemmvorrichtung durch eine Verstellung des Spannelements an eine Klemmung von Trägern mit in Andrückrichtung variierenden Klemmabschnitsabmessungen anpassbar ist.

Derartige Klemmvorrichtungen finden insbesondere Verwendung für den Zusammenbau von Schalungsträger-Rosten, die mit Schalhaut belegt sind und als Decken- und Wandschalungen zur Herstellung von Stahlbetondecken und -wänden eingesetzt werden. Die einzelnen Schalungsträger aus Holz (bspw. der Bezeichnung H20), Aluminium, GFK-Profilen oder Stahlwalzprofilen werden zu einem Trägerrost aus sich kreuzenden Schalungsträgern verschraubt, wozu die die Schalhaut tragenden Schalungsträger kreuzend auf einer Lage starker, die Last sammelnder Schalungsträger(Jochträger) aufgelagert werden. Für die benötigten Klemmverbindungen sind bereits Klemmvorrichtungen für die verschiedensten Trägerbauformen und -anordnungen bekannt, wobei hinsichtlich einzelner Klemmvorrichtungen häufig entweder eine Spezialisierung auf bestimmte Träger und Verbindungsarten oder ein aufwändiger Aufbau mit oft kompliziertem Kraftfluss besteht. Eine gattungsgemäße Klemmvorrichtung ist aus der DE 199 60 456 C1 in Bauform einer sog. Hakenbride bekannt. Bei dieser ist das Andrückelement aus einem dünnen Band gebildet, an dessen beiden Enden jeweils mittels Schraubverbindungen abstands- bzw. längeneinstellbar jeweils ein Umgreifelement bildende Paare von Zuggliedern vorgesehen sind. Die bekannte Hakenbride weist damit eine in sich mehrfache Verstellbarkeit ihrer zueinander beweglichen Komponenten auf, die vor jedem neuen Einsatz zunächst in eine geeignete Ausgangsstellung gebracht und bei gemeinsamer Aufbewahrung in größerer Stückzahl ggf. zuvor noch entwirrt werden müssen.

Vor diesem Hintergrund liegt der vorliegenden Erfindung die Aufgabe zugrunde, eine Klemmvorrichtung der eingangs genannten Art gebrauchsvorteilhaft weiterzubilden, so dass insbesondere die Vorbereitung auf einen neuen Einsatz vereinfacht wird.

Diese Aufgabe ist nach der vorliegenden Erfindung zunächst und im Wesentlichen beim Gegenstand von Anspruch 1 gelöst, der darauf abstellt, dass ein Federelement vorgesehen ist, welches in ungeklemmtem Zustand durch dessen Federwirkung eine Beabstandung von Umgreifelement und Andrückelement in dem von einer Einstellung des Spannelementes abhängigen größtmöglichen Abstand bewirkt. Durch das Federelement sind die Einzelteile der Klemmvorrichtung immer wieder automatisch zueinander vorpositioniert, so dass eine Rückkehr in die Einbauposition gebrauchsvorteilhaft durch bloßes Verstellen des Spannelementes erfolgen kann und insofern ein Entwirren nach dem Transport nicht notwendig ist. Dabei ist ausreichend, wenn eine entsprechende Funktionalität der Feder jedenfalls im größten Teil des Einstellbereiches des Spannelements gegeben ist. Durch die vorgeschlagene Lösung lässt sich die Klemmvorrichtung nach einer Demontage schnell erneut wieder montieren, wobei die Rückkehr in eine bzw. Einstellung einer an Klemmabschnittsabmessungen der Träger in Andrückrichtung angepasste Ausgangsstellung und das anschließende Klemmen einfach und zeitsparend mittels ein- und desselben Spannelementes möglich ist. Eine preiswerte und zweckmäßige Ausgestaltung ist insbesondere in der Form möglich, dass das Federelement als Zylinderdruckfeder ausgebildet sowie platzsparend und geschützt zwischen Umgreifelement und Andrückelement angeordnet ist. Im Vergleich mit einer Zugfeder ist hier auch der Vorteil gegeben, dass an die Stelle einer Einspannung oder sonstigen Befestigung der Federenden eine bloße Abstützung gegen Umgreifund Andrückelement tritt und auch nicht die Gefahr eines Funktionsausfalles durch Federbruch besteht. Des Weiteren ist bevorzugt, dass die Längsverstelleinrichtung eine an dem Umgreifelement gehaltene Gewindestange umfasst, welche das Federelement und das Andrückelement längsverschieblich durchsetzt, und dass das Federelement in ungeklemmtem Zustand das Andrückelement federnd gegen das Spannelement, insbesondere gegen eine als solches auf die Gewindestange aufgeschraubte Flügelmutter, drückt. Die besagte Längsführung kann vorteilhaft eine in dem Andrückelement ausgebildete, von der Gewindestange durchsetzte Durchgangsbohrung aufweisen, deren Bohrungsabmessungen dazu geeignet an den Gewindestangendurchmesser angepasst sind. Als Gewindestange kann vorzugsweise eine Steckschraube, insbesondere aufweisend eine kopfseitig daran befestigte Taumelniete mit konvex gerundetem Nietkörper, vorgesehen sein. In diesem Zusammenhang ist zweckmäßig, wenn das Umgreifelement einen Stegabschnitt mit einer dem Spannelement zuweisenden Ausbuchtung aufweist, in welcher eine Bohrung zum Durchtritt der Steckschraube vorgesehen und welche an die Taumelniete geometrisch zu deren insbesondere drehformschlüssiger Aufnahme angepasst ist. Eine solche Aufnahme der Taumelniete in der Ausbuchtung bringt den Vorteil, dass die die Klemmkraft zwischen dem Stegabschnitt und der Gewindestange übertragende Taumelniete nicht über die dem zu umgreifenden ersten Träger zugewandte Stegabschnittoberfläche übertritt, so dass die Montage an einem zu umgreifenden Träger nicht behindert wird. Zusätzlich wird durch den gebildeten Drehformschluss beim Betätigen des Spannelementes bzw. Verdrehen einer bspw. Flügelmutter ein unbeabsichtigtes Mitdrehen der Gewindestange automatisch verhindert.

Gemäß einem weiteren Aspekt der Erfindung, der auch eigenständig Bedeutung besitzen kann, besteht die Möglichkeit, dass das Umgreifelement und das Andrückelement in einer zu der Andrückrichtung insbesondere senkrechten Ebene zueinander drehformschlüssig aneinander gehalten sind, wobei in einer zu der Andrückrichtung senkrechten Projektionsebene eine Seitenanlage des Umgreifelementes für den ersten Träger und eine Seitenanlage des Andrückelementes für den zweiten Träger in einem vorbestimmten Winkel, insbesondere in einem Winkel von 90°, zueinander ausgerichtet sind. Dadurch wird zweckmäßig automatisch eine gewünschte Ausrichtung zweier durch die Klemmvorrichtung miteinander zu verbindender Träger erreicht, insbesondere eine Ausrichtung, bei der die Längsrichtungen der beiden Träger zueinander rechtwinklig verlaufen. In weiterer Ausgestaltung kann das Umgreifelement zumindest einen L-profilartigen Umgreifbügel aufweisen, dessen einer L-Schenkel unter Ausbildung einer U-profilartigen Umgreifung endseitig starr mit dem Stegabschnitt verbunden ist. Die besagte Seitenanlage für den ersten Träger kann dabei von dem stegnahen L-Schenkel des Umgreifbügels gebildet werden. Andererseits kann der stegabgewandte L-Schenkel des Umgreifbügels eine dem Stegabschnitt zuweisend gegenüberliegende, zu der Andrückrichtung im Wesentlichen senkrechte Umgreiffläche bilden. Eine zweckmäßige Weiterbildung kann darin bestehen, dass das Umgreifelement zumindest einen L-profilartigen Umgreifbügel aufweist, dessen einer L-Schenkel gelenkig mit dem Stegabschnitt verbunden ist, wobei der Umgreifbügel zwischen einer Uprofilartigen Umgreifstellung und einer Offenstellung, in welcher sich der gelenknahe Schenkel des Umgreifbügels zumindest anteilig oder im Wesentlichen in Richtung des Stegabschnittes erstreckt, um eine Schwenkachse vierschwenkbar ist. Einer solchen Ausgestaltung kommt insbesondere bei einer Klemmvorrichtung mit je einem schwenkbaren und einem starren Umgreifbügel, die an dem Stegabschnitt in einem Klemmquerschnitt achsensymmetrisch mit einander zuweisenden freien Enden angeordnet bzw. anordbar sind, Bedeutung im Hinblick auf eine dadurch ermöglichte Panikfunktion zu. Es kann vorkommen, däss man Trägerroste nachträglich durch zusätzlich eingeschobene Schalungsträger verstärken muss, ohne alle anderen Knotenpunkte zu lösen. Somit ist es hilfreich, wenn man die Klemmvorrichtung aufgrund der eckseitigen Scharnierlage mit einem aufgeschwenkten Umgreifbügel an beliebiger Stelle seitlich auf den zu umgreifenden Träger schieben kann, ohne vorher andere Knoten zu lösen. Nach dem seitlichen Aufschieben kann der schwenkbare Umgreifbügel in eine zu dem zweiten, bevorzugt starren Umgreifbügel achsen- bzw. profilsymmetrische Geschlossenstellung umgeklappt werden, worauf durch Betätigung des Spannelementes in einem Zuge ggf. zunächst eine Anpassung an die Klemmabschnittsabmessungen der Träger in Andrückrichtung und sodann die Klemmung erfolgen kann. Um bei der Überführung des schwenkbaren Umgreifbügels in die Geschlossen- bzw. Klemmstellung auch bei bspw. unregelmäßigem Profil des zu umgreifenden Trägers automatisch eine achsensymmetrische Endlage zu erhalten, kann zwischen dem gelenknahen L-Schenkel und dem Stegabschnitt, insbesondere der Stirnfläche des Stegabschnittes, ein Drehanschlag vorgesehen sein, der den zwischen dem gelenknahen L-Schenkel und dem Stegabschnitt eingeschlossenen Winkel als kleinstmöglichen Wert auf den entsprechenden Winkel des starren Umgreifbügels, insbesondere auf etwa 90°, begrenzt. Hinsichtlich der Umgreifbügel besteht weiter auch die Möglichkeit, dass deren die Andrückkraft in den umgriffenen Trägerabschnitt einleitenden Umgreifflächen mit in Trägerlängsrichtung und/ oder in Richtung der Schwenkachse verlaufenden Rippen versehen sind, wodurch der Halt der Klemmvorrichtung an dem zu umgreifenden Träger auch schon vor dem Festspannen verbessert wird.

Hinsichtlich des Andrückelementes kann vorgesehen sein, dass dieses einen Stegabschnitt aufweist und zumindest einen daran seitlich angeschlossenen, L-profilartigen Andrückbügel, dessen einer L-Schenkel eine zu der Andrückrichtung im Wesentlichen senkrechte Andrückfläche bildet und dessen anderer L-Schenkel eine Seitenanlage für den zweiten Träger bildet. Alternativ oder kombinativ kann an dem Stegabschnitt des Andrückelementes seitlich ein Andrückbügel angeschlossen sein, der einen eine Seitenanlage für den zweiten Träger bildenden Schenkel und davon seitlich treppenartig niveauversetzte, zu der Andrückrichtung im Wesentlichen senkrechten Andrückflächen aufweist. Dies bringt den Vorteil, dass eine Anpassung an verschiedene Klemmabschnittabmessungen in Andrückrichtung der zu verbindenden Träger, insbesondere der Abmessungen eines Ober- bzw. Untergurtes des anzudrückenden Trägers, auch durch Auswahl der jeweils niveaumäßig nächsten treppenartig niveauversetzten Andrückfläche vereinfacht wird. Dies bedeutet weiter, dass in Verbindung mit dem gleichfalls eine Anpassung ermöglichenden Spann- bzw. Betätigungselement ein insgesamt vergrößerter Einstellbereich zur Anpassung an verschiedene Klemmquerschnittsabmessungen der Träger bereitgestellt wird, so dass mit der Klemmvorrichtung als Universalteil eine noch größere Kombinationsvielfalt von Schalungsträgern abzudecken ist. Andererseits kann die Klemmvorrichtung bei einer wiederholten Klemmung mit bspw. gleicher Klemmenweite nach einer Demontage für einen folgenden Klemmvorgang unmittelbar, d. h. sogar ohne Zurückstellen des Spann- bzw. Betätigungselements, zur Verfügung stehen, indem dafür dann eine geeignet niveauversetzte Andrückfläche zur Anlage an dem anzudrückenden Träger ausgewählt wird. Dies bedeutet, dass eine noch bequemere Handhabung und schnellere Ausführung der Klemmverbindung ermöglicht ist. Die Andrückflächen können dazu bspw. stirnseitig von jeweils eine Seitenanlage für den an zudrückenden Träger bietenden Schenkeln liegen. Hinsichtlich der treppenartigen Andrückflächen kann auch eine Gestaltung Vorteile bieten, bei der diese im Bodenbereich von U-profilartigen Vertiefungen liegen. Derartige Vertiefungen können in Querrichtung sogar an eine formschlüssige Aufnahme von an dem Träger in Längsrichtung verlaufenden Stegen angepasst sein, wodurch sich ein seitliches Abrutschen der Andrückfläche von dem Klemmabschnitt, bspw. Ober- oder Untergurt, eines anzudrückenden Trägers verhindern lässt. Alternativ oder kombinativ kann auch vorgesehen sein, dass ein eine Seitenanlage für den zweiten bzw. anzudrückenden Träger bildender Schenkel des Andrückelements in einer zur Andrückrichtung senkrechten Ebene in drehformschlüssiger Anlage mit dem Umgreifelement, insbesondere mit dem Bereich der Ausbuchtung seines Steg-abschnittes, gehalten ist. Insbesondere kann bezüglich der Andrückrichtung die Erstreckung der Ausbuchtung etwa gleich dem Verstellbereich des Spannelementes bemessen sein. Die Länge des die Seitenanlage für den zweiten Träger bildenden Schenkels des Andrückelementes kann dann ihrerseits so gewählt werden, dass dessen Rand bei bzgl. der Andrückrichtung kleinstmöglichem Abstand von Umgreif- und Andrückelement nicht oder nur unwesentlich über d en Stegabschnitt des Umgreifelementtes übersteht und dass andererseits die drehformschlüssige Anlage in dem gesamten Verstellbereich erhalten bleibt. In Weiterführung des Gedankens kann das Andrückelement den Stegabschnitt des Umgreifelements im Bereich der Ausbuchtung auch U-förmig umgreifen, wobei die drehformschlüssige Anlage ein- oder beidseitig erfolgen kann. Alternativ oder kombinativ ist auch an die Möglichkeit gedacht, dass das dem Betätigungselement abgewandte Ende der Gewindestange geometrisch an einen formschlüssigen Eingriff in eine übliche T-Nut eines Trägers angepasst ist. Dies ermöglicht es, die Klemmkraft in den zu umgreifenden ersten Träger je nach Anwendungsfall entweder nur über das Ende der Gewindestange, d. h. bspw. den Kopf der Taumelniete, oder kombinativ zu einer Krafteinleitung mittels der Umgreifflächen einzuleiten. Schließlich besteht zu einer gewichtseinsparenden und preiswerten Ausführung der Klemmvorrichtung die Möglichkeit, dass das Umgreifelement und/ oder das Andrückelement aus Aluminiumprofilen, insbesondere aus Aluminiumstrangpressprofilen, hergestellt sind.

Die vorliegende Erfindung wird nachfolgend mit Bezug auf die beigefügte Zeichnungen, die Ausführungs- und Anwendungsbeispiele zeigen, näher beschrieben. Darin zeigt:
- Fig. 1: eine perspektivische Ansicht der erfindungsgemäßen Klemmvorrichtung in einer bevorzugten Ausführungsform;
- Fig. 2: eine Seitenansicht der in Fig. 1 gezeigten Klemmvorrichtung in Blickrichtung II;
- Fig. 3: eine Draufsicht der in Fig. 1 gezeigten Klemmvorrichtung in Blickrichtung III;
- Fig. 4: eine Seitenansicht der in Fig. 1 gezeigten Klemmvorrichtung in Blickrichtung IV nach Fig. 2;
- Fig. 5: eine Schnittansicht der in Fig. 1 gezeigten Klemmvorrichtung entlang Schnittlinie V - V in Fig. 3;
- Fig. 5a: einen vergrößerten Teilschnitt entlang Schnittlinie Va - Va in Fig. 5;
- Fig. 6: perspektivisch ein erstes Anwendungsbeispiel der in Fig. 1 dargesteilten Klemmvorrichtung;
- Fig. 7: eine Seitenansicht der in Fig. 6 gezeigten Anordnung in Blickrichtung VII;
- Fig. 8: einen vergrößerten Teilschnitt entlang Schnittlinie VIII - VIII nach Fig. 7;
- Fig. 9: in Seitenansicht ein zweites Anwendungsbeispiel der in Fig. 1 dargestellten Klemmvorrichtung;
- Fig. 10: in Seitenansicht ein drittes Anwendungsbeispiel der in Fig. 1 dargestellten Klemmvorrichtung;
- Fig. 11: in Seitenansicht ein viertes Anwendungsbeispiel der in Fig. 1 dargestellten Klemmvorrichtung;
- Fig. 12: ein fünftes Anwendungsbeispiel der in Fig. 1 dargestellten Klemmvorrichtung und
- Fig. 13: ein sechstes Anwendungsbeispiel der in Fig. 1 dargestellten Klemmvorrichtung.

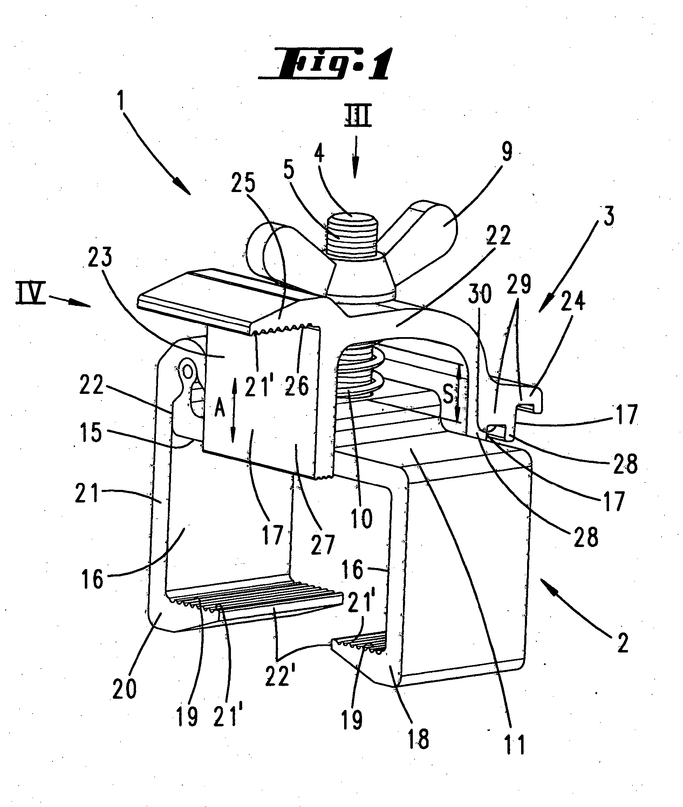

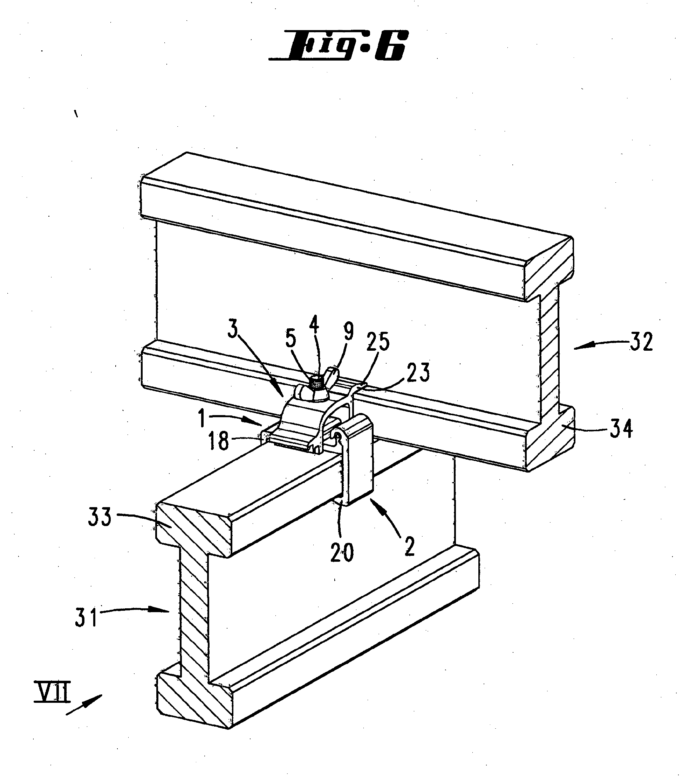

Figur 1 zeigt perspektivisch die erfindungsgemäße Klemmvorrichtung 1 in einer ersten bevorzugten Ausführungsform. Diese weist ein Umgreifelement 2 zum zumindest bereichsweisen Umgreifen eines ersten, nicht mit dargestellten Trägers und ein Andrückelement 3 zum Andrücken eines zweiten, ebenfalls nicht mit dargestellten Trägers gegen den ersten Träger in einer Andrückrichtung A auf. Wie besonders auch in Verbindung mit den Ansichten und Schnitten dieser Klemmvorrichtung 1 zeigenden Figuren 1 bis 5a deutlich wird, ist eine Steckschraube 4 mit einer Gewindestange 5 und einer als Schraubenkopf vorgesehenen Taumelniete 6 in Blickrichtung der Fig. 1 von unten durch eine Bohrung 7 in dem Umgreifelement 2 und eine Bohrung 8 in dem Andrückelement 3 hindurchgesteckt und auf das freie überstehende Ende der Gewindestange 5 eine Flügelmutter 9 aufgeschraubt. In einem in Andrückrichtung A verbleibenden Zwischenraum entsprechend dem Abstand S ist ein Federelement 10 in Gestalt einer Zylinderdruckfeder eingesetzt, welche von der Gewindestange 5 gleichfalls durchtreten wird. Da der Kopf der Steckschraube 4 in einem Querschnitt größer als die Bohrung 7 in dem Umgreifelement 2 ist und auch die Flügelmutter 9 als Spannelement größer als die Bohrung 8 in dem Andrückelement 3 bemessen ist, wird der in Andrückrichtung A größtmögliche Abstand S einseitig jeweils von der Flügelmutter 9 begrenzt, so dass der Abstand S abhängig von der jeweils durch ein Verdrehen gewählten Einstellung der Flügelmutter 9 ist. Das Federelement 10 ist so bemessen, dass es bei jedem in dem möglichen Verstellbereich der Flügelmutter 9 resultierenden größtmöglichen Abstand S unter Druckspannung steht. Dies bewirkt, dass das Umgreifelement 2 und das Andrückelement 3 in ungeklemmtem Zustand in dem von der jeweiligen Einstellung der Flügelmutter abhängigen größtmöglichen Abstand S beabstandet werden. Dies bedeutet, dass durch eine Verdrehung der Flügelschraube 9 in Richtung auf den durch die Taumelniete 6 gebildeten Kopf der Steckschraube der Abstand Sentgegen der Federwirkung verringerbar ist und sich andererseits durch entgegengesetzte Verdrehung der Flügelmutter 9 unter Federwirkung automatisch vergrößern lässt, so dass zunächst auch eine Anpassung an in Andrückrichtung A variierende Klemmabschnittsabmessungen von Trägern ermöglicht wird. Nach entsprechender, in Andrückrichtung A spielfreier Anbringung der Klemmvorrichtung 1 an zwei zu verbindende Träger (vgl. z. B. Figur 6) kann wiederum mit der Flügelmutter 9, d. h. mit dem gleichen Spannelement der zuvor beschriebenen Längsverstelleinrichtung, durch weiteres Verdrehen in Richtung auf den Kopf der Steckschraube sodann auch die zum Klemmen benötigte Andruckkraft erzeugt werden und umgekehrt im Bedarfsfall wieder aufgehoben werden. Die Andrückrichtung A ist ersichtlich durch eine Längsführung zwischen Umgreifelement 2 und Andruck-element 3 vorgegeben. In dem gezeigten Ausführungsbeispiel, jedoch nicht notwendig, wird eine Längsführung durch eine im Durchmesser und in der Höhe geeignete Abstimmung der Bohrung 8 in dem Andrückelement 3 auf die Gewindestange 5 erreicht, so dass die Gewindestange 5 als Bestandteil der Längsführung und der Längsverstelleinrichtung eine Doppelfunktion eifüllt.

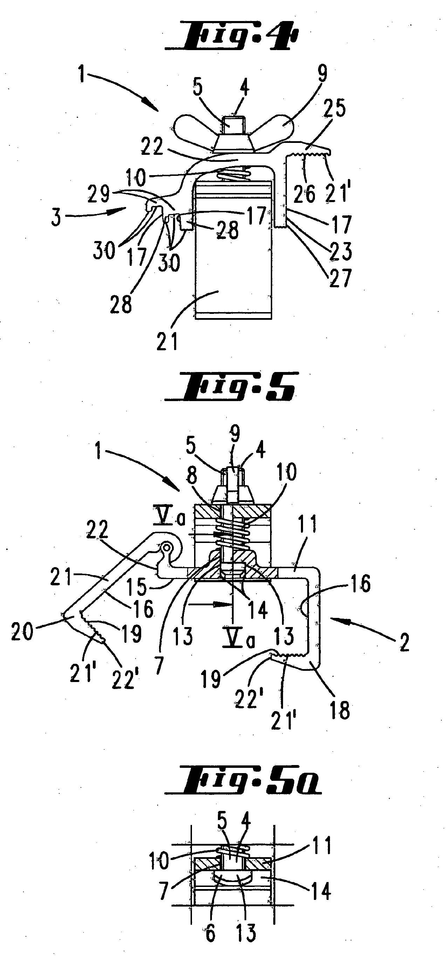

Wie weiter dargestellt, weist das Umgreifelement 2 einen Stegabschnitt 11 mit in dessen Mittenbereich vorgesehener Ausbuchtung 12 in Richtung auf das Andrückelement 3 auf, wobei die Bohrung 7 durch den Boden der Ausbruchtung 12 verläuft. Wie besonders den Figuren 5, 5a deutlich zu entnehmen ist, ist die Ausbuchtung 12 hinsichtlich ihres Innenraumes an die Taumelniete 6 zu deren drehformschlüssiger Aufnahme angepasst, in der sie durch das Federelement 10 auch bereits in ungeklemmtem Zustand gehalten wird. Der Drehformschluss bewirkt, dass beim Verdrehen der Flügelmutter 9 die Gewindestange 5 nicht ungewollt mitdrehen kann, so dass ein einhändiges Montieren ohne gesondertes Gegenhalten der Steckschraube erfolgen kann. Der Drehformschluss wird in weiterer Einzelheit dadurch erreicht, dass, wie bspw. den Figuren 5, 5a deutlich zu entnehmen ist, die Taumelniete 6 zwei zueinander parallele, abgeflachte Kopfseiten 13 aufweist, welche in nahezu spielfreie Anlage zu an die Bohrung 7 anschließende flache Wandinnenflächen 14 der Ausbuchtung 12 treten. Die Aufnahme des Steckschraubenkopfes in der Ausbuchtung 12 ist des Weiteren so beschaffen, dass der Schraubenkopf nicht über die einem zu umgreifenden Träger zugewandte Oberfläche 15 des Steckabschnittes 11 übersteht, so dass das Umgreifen eines (in den Figuren 1 bis 5 nicht mit dargestellten Trägers) nicht behindert wird.

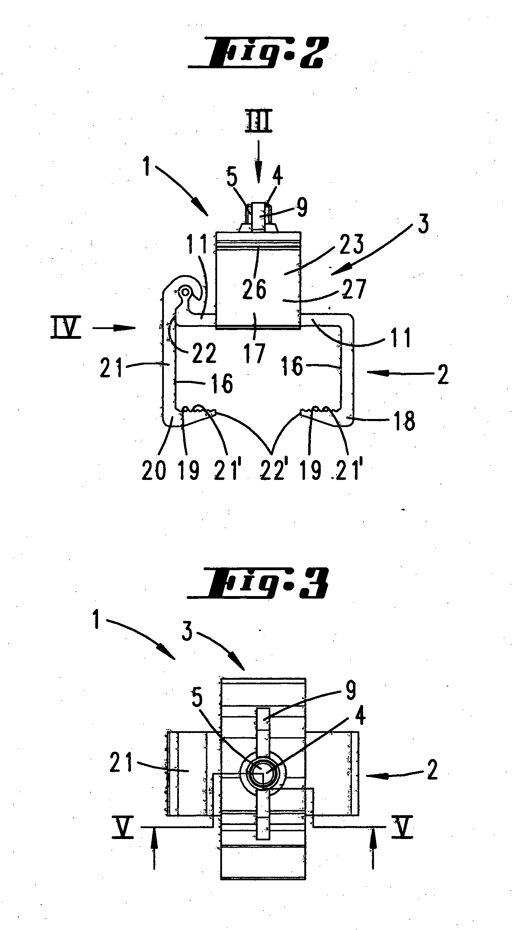

Weiter ist vorgesehen, dass das Umgreifelement 2 und das Andrückelement 3 in einer zu der Andrückrichtung A senkrechten Ebene zueinander drehformschlüssig gehalten sind, indem das Andrückelement 3 das Umgreifelement 2 im Bereich seiner Ausbuchtung 12 zu deren Stirnseiten im Wesentlichen jeweils flächenparallel, insgesamt U-förmig umgreift, wobei durch das geringe seitliche Bewegungsspiel (vgl. Fig. 4) eine im Wesentlichen drehformselflüssige Anlage verwirklicht ist. Zugleich wird durch diese Ausgestaltung die zwischen Umgreifelement 2 und Andrückelement 3 bestehende Längsführung unterstützt. In weiterer Ausgestaltung sind in einer zur Andrückrichtung A senkrechten Projektionsebene Seitenanlagen 16 des Umgreifelementes 2 für den er sten Träger und Seitenanlagen 17 des Andrückelementes 3 für den zweiten Träger durch den besagten Drehformschluss in einem vorbestimmten Winkel, in dem gezeigten Beispiel in einem Winkel von 90° bzw. rechtwinklig, zueinander ausgerichtet. Die Seitenanlagen 16 sind an jeweils L-profilartigen Umgreifbügeln 18, 20 des Umgreifelementes 2 vorgesehen, von denen der eine Umgreifbügel 18 unter Ausbildung einer U-profilartigen Umgreifungeines nicht dargestellten Trägers endseitig starr mit dem Stegabschnitt 11 verbunden ist. Während der stegnahe Schenkel des Umgreifbügels 18 die besagte Seitenanlage 16 bildet, ist an dem stegabgewandten L-Schenkel eine dem Stegabschnitt 11 zuweisend gegenüberliegende, zu der Andrückrichtung A im Wesentlichen senkrechte Umgreiffläche 19 gebildet. An dem gegenüberliegenden Ende des Stegabschnittes 12 ist der weitere L-profilartige Umgreifbügel 20 vorgesehen, dessen einer L-Schenkel 21 gelenkig mit dem Stegabschnitt 12 verbunde ist. Der Umgreifbügel 20 ist damit zwischen einer in Figur 1 gezeigten U-profilartigen Umgreifstellung und einer in Figur 5 gezeigten Offenstellung verschwenkbar, in welcher sich der gelenknahe L-Schenkel des Umgreifbügels 20 anteilig in Richtung des Stegabschnittes 11 erstreckt. Auch der gelenkferne L-Schenkel des Umgreifbügels 20 weist eine zu der Andrückrichtung A senkrechte Umgreiffläche 19 auf, wobei an beiden Umgreiflächen 19 als Rutschsicherung Rippen 21' mit zu der Schwenkachse des Umgreifbügels 20 paralleler Ausrichtung verlaufen. Wie besonders aus einem Vergleich der Figuren 2 und 5 deutlich wird, ist zwischen dem gelenknahen L-Schenkel 21 und der Stirnfläche 22 des Stegabschnittes 11 ein Drehanschlag vorgesehen, der den eingeschlossenen Winkel auf einen Kleinstwert von in dem Beispiel 90° begrenzt. Hinsichtlich des Umgreifelementes 2 ist insgesamt eine Formgebung vorgesehen, bei der bei zugeklapptem Umgreifbügel 20 die beiden Umgreifbügel 18, 20 an dem Stegabschnitt 11 hinsichtlich eines Klemmquerschnittes achsensymmetrisch mit einander zuweisenden freien Enden 22' angeordnet sind.

Hinsichtlich des Andrückelementes 3 ist vorgesehen, dass an dessen Stegabschnitt 22 auf der einen Seite ein in sich L-profilartiger Andrückbügel 23 und gegenüberliegend ein im Profil abweichender Andrückbügel 24 angeschlossen sind. Der Andrückbügel 23 besitzt einen L-Schenkel 25, welcher eine zu der Andrückrichtung A im Wesentlichen gleichfalls senkrechte Andrückfläche 26 bildet und dessen anderer L-Schenkel 27 die besagte Seitenanlage 17 für den (in den Figuren 1 bis 5 nicht mit dargestellten) anzudrückenden zweiten Träger bildet. Die Andrückfläche 26 ist gleichfalls an der Oberfläche mit Rippen 21' versehen, die in Längsrichtung des anzudrückenden Trägers verlaufen. Der gegenüberliegende Andrückbügel 24 bildet bei insgesamt treppenartiger Abstufung mehrere jeweils eine Seitenanlage 17 für einen anzudrückenden Träger bildende Schenkel 28 mit davon jeweils ausgehendem Andrücksegment 29. Diese tragen entsprechend der treppenartigen Abstufung zueinander in Andrückrichtung A niveauversetzte Andrückflächen 30, die zur Andrückrichtung A im Wesentlichen senkrecht verlaufen. Dabei sind die Andrückflächen 30 im Bodenbereich von U-profilartigen Vertiefungen und stirnseitig an Schenkeln vorgesehen.

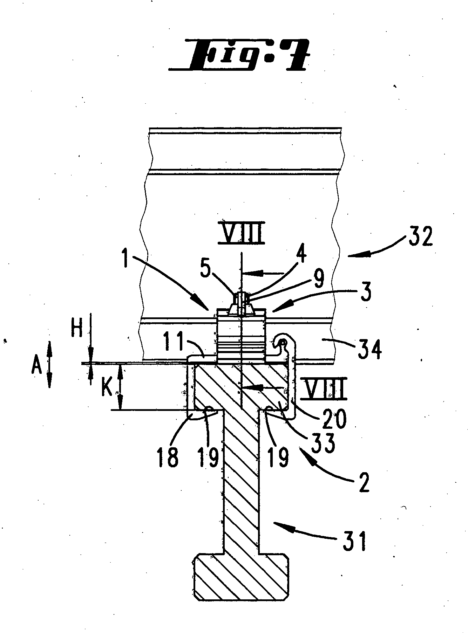

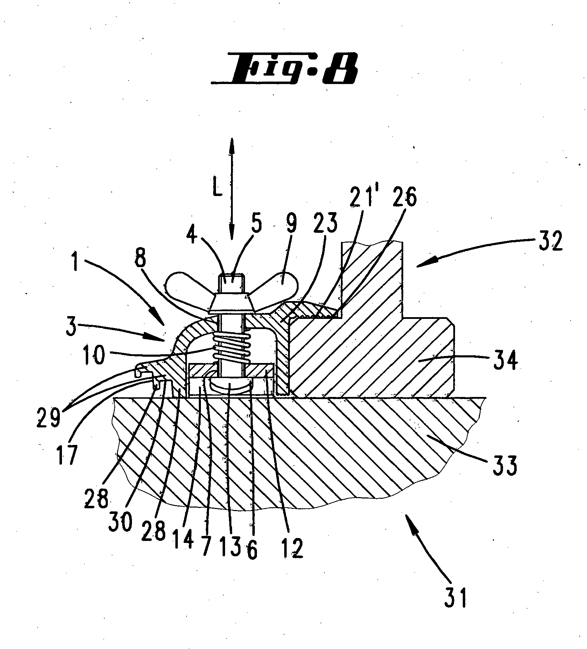

Die Figuren 6 bis 13 zeigen beispielhaft verschiedene Anwendungsmöglichkeiten der mit Bezug auf die Figuren 1 bis 5a beschriebenen Klemmvorrichtung an verschiedenen Trägern. Die Figuren 6 bis 8 betreffen eine erste Anwendung an zwei gleichartigen, I-profilartigen Trägern 31,32, wie diese als sog. Holzschalungsträger H20 beim Schalungsbau Anwendung finden. Bei der gezeigten Klemmverbindung wird der Obergurt 33 des Trägers 31 von dem Umgreifelement 2 mit dessen Umgreifbügeln 18, 20 umgriffen und der Untergurt 34 des Trägers 32 von dem Andrückelement 3 mit dessen Andrückbügel 23 gegen den Obergurt 33 angedrückt. In dem gewählten Beispiel ist die Umgriffsweite, d. h. der Abstand zwischen den Umgreifflächen 19 und dem Stegabschnitt 11 geringfügig größer als die Klemmabschnittsabmessung K des Obergurtes 33 bemessen, so dass ein schmaler Zwischenraum mit Spalthöhe H zwischen obergurt 33 und Stegabschnitt 11 verbleibt. Andererseits wird der Untergurt 34 des Trägers 32 nach in Andrückrichtung A spielfreier Anbringung der Klemmvorrichtung 1 von dessen Andrückelement 3 durch weiteres Verdrehen der Spannschraube 9 direkt gegen den Obergurt 33 des Trägers 31 gepresst, wodurch die gewünschte Klemmverbindung erhalten wird. Durch die beschriebene Längsverstelleinrichtung mit Gewindestange 5 und Flügelmutter 9 als Spannelement wird die Klemmkraft, beim Anziehen der Flügelmutter 9 aufgrund des durch die verklemmten Trägerabschnitte bewirkten Bewegungswiderstands der Spannschraube an dem Gewinde bereitgestellt. Natürlich wäre andererseits auch denkbar, dass von dem Umgreifelement 2 auch abweichend gestaltete und dimensionierte Trägerabschnitte umgriffen werden. Insbesondere kann dabei der in Figur 7 gezeigte Spalt H auch größer bemessen sein oder andererseits auch in Wegfall geraten.

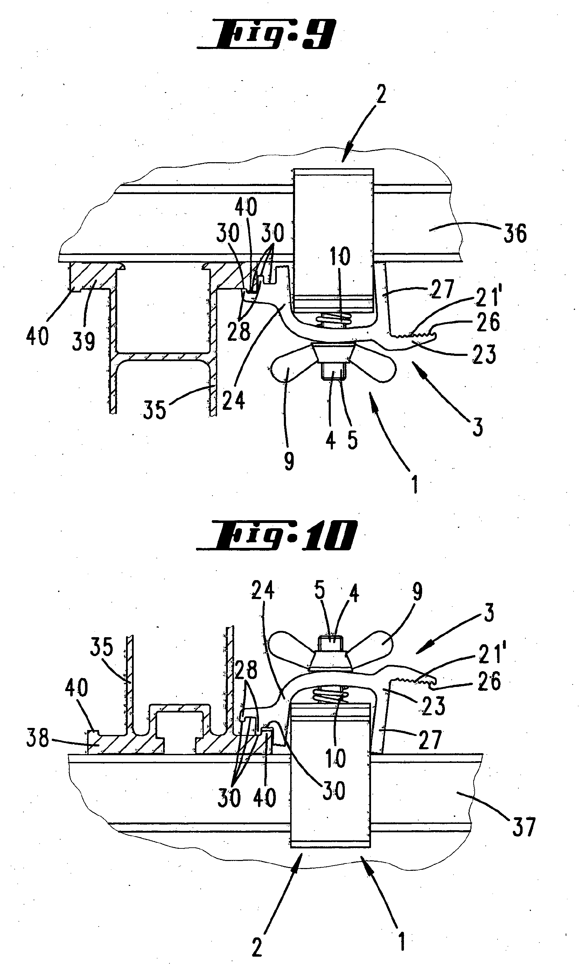

Die Figuren 9 und 10 betreffen einen zweiten Anwendungsfall, bei welchem die Klemmvorrichtung 1 dazu verwendet wird, um an einem in Vertikalrichtung aufgebrochen dargestellten Aluminium-Schalungsträger 35, der auch unter der Bezeichnung Alu-Schalungsträger Titan 160H geläufig ist, ober- und unterseitig zwei zu dem Aluminium-Schalungsträger 35 senkrecht und zueinander parallel verlaufende Holzschalungsträger 36,37 der Bauform H20 anzuklemmen. Der Aluminium-Schalungsträger 35 weist ober- und unterseitig unterschiedlich dick gestaltete Flansche 38, 39 mit Vorsprüngen 40 auf. Zum jeweiligen Andrücken dient in diesem Anwendungsfall ein Andrückbügel 24 mit treppenartig niveauversetzten Andrückflächen 30, von denen hier zum Andrücken nicht diejenigen im Bodenbereich der U-profilartigen Vertiefungen, sondern an Schenkeln 28 stirnseitig liegenden Verwendung finden. Gleichwohl ist durch den dabei erzielten Eintritt der Vorsprünge 40 in die U-profilartigen Vertiefungen an den Andrückbügeln 24 ein seitlicher Formschluss gegeben, so dass ein Abrutschen des Andrückelements 3 von dem Flansch 38, 39 verhindert wird. In dem gewählten Anwendungsbeispiel ist die Gestaltung der Klemmvorrichtung so auf die zu verbindenden Trägerbauformen abgestimmt, dass sich der L-Schenkel 27 des dem Andrückbügel 24 gegenüberliegenden Andrückbügels 23 stirnseitig an dem jeweils zugeordneten Holz-Schalungsträger im Rahmen des Bewegungsspiels gelenkartig abstützt.

Die an dem oberen und unteren Flansch des Aluminium-Schalungsträgers 35 unterschiedliche Flanschdicke, d. h. Klemmabschnittsabmessungen, werden, wie ersichtlich, dadurch ausgeglichen, dass auf verschiedenen Niveaustufen liegende Andrückflächen 30 zur Anlage gewählt worden sind.

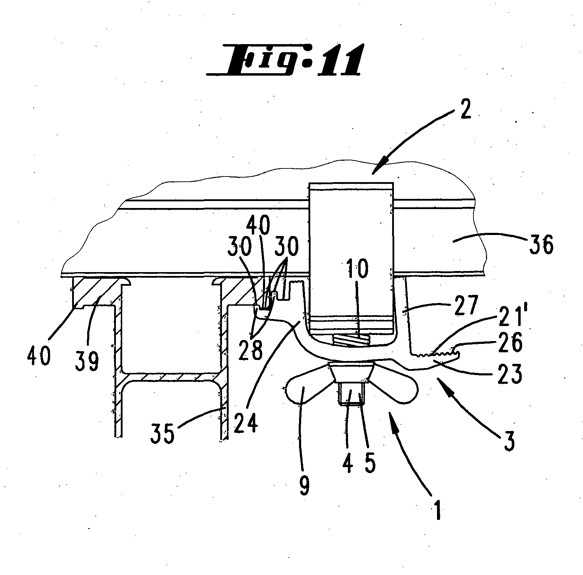

In Figur 11 ist ein von Figur 9 nur insoweit abweichender Anwendungsfall gezeigt, als in Figur 11 der Holz-Schalungsträger 36 exemplarisch eine verminderte untere Flanschstärke besitzt. Dieser, in der Praxis bspw. durch Beschädigungen verursachte, Unterschied wird dabei jedoch durch die Klemmvorrichtung 1 ausgeglichen.

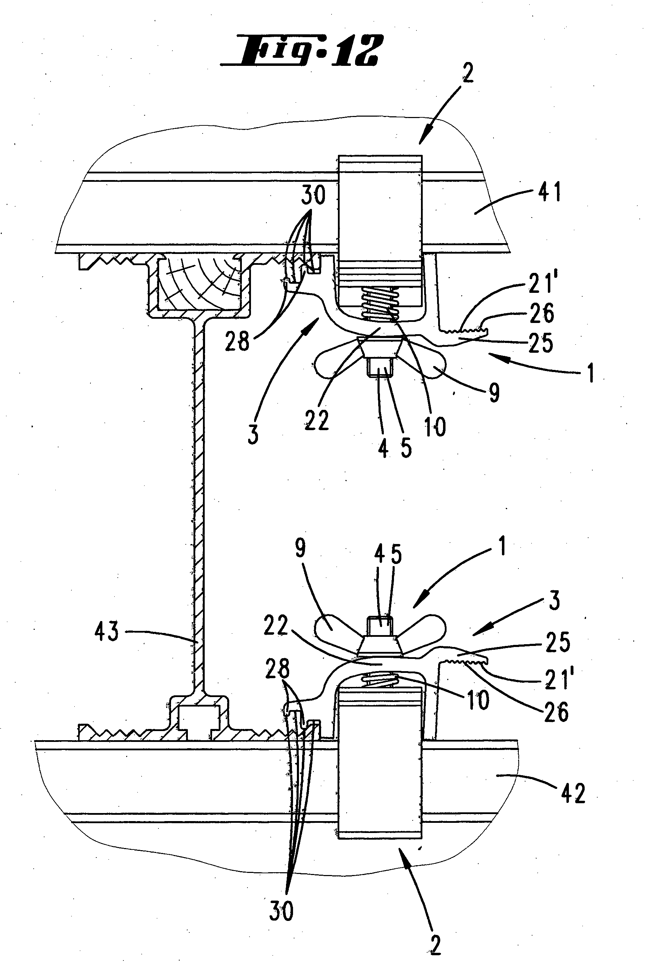

Figur 12 betrifft ein noch weiteres Anwendungsbeispiel, bei welchem zwei mit den Bezugszeichen 41, 42 bezeichnete Holz-Schalungsträger H20 an einen mit dem Bezugszeichen 43 gekennzeichneten Aluminium-Schalungsträger angeklemmt werden, der auch unter der Bezeichnung Titan 160 geläufig ist. Auch dieser Aluminium-Schalungsträger 43 weist ober- und unterseitig voneinander abweichende Flansche, jedoch bei etwa entsprechenden Klemmabschnittsabmessungen auf. An dem Andrückelement 3 sind daher auf gleicher Niveaustufe liegende Andrückflächen 30 zum Andrücken gegen die HolzSchalungsträger 41, 42 gewählt.

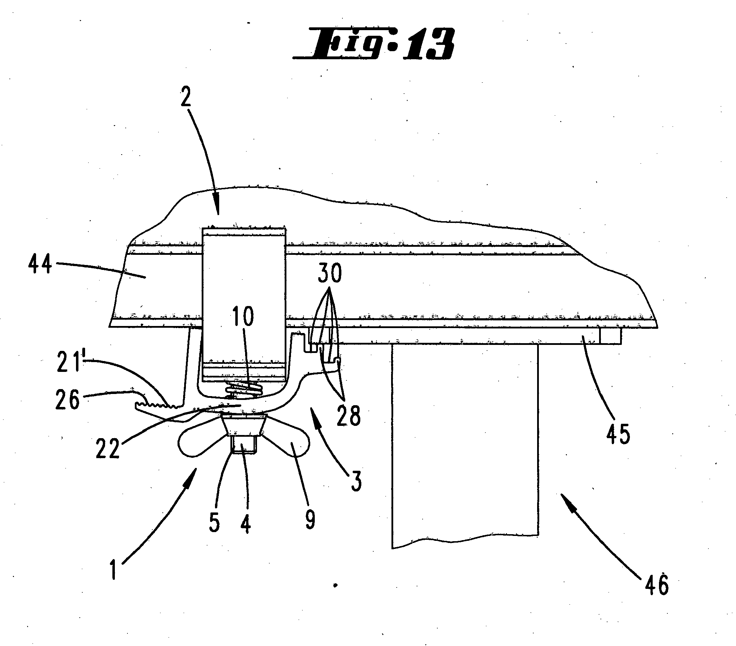

Figur 13 betrifft ein noch weiteres Anwendungsbeispiel, bei dem ein mit dem Bezugszeichen 44 gekennzeichneter Holz-Schalungsträger H20 auf entsprechende Weise mit der Klemmvorrichtung 1 an eine Kopfplatte 45 einer Schalungsstütze 46 angeklemmt ist. Wie bei den vorangehenden Anwendungsbeispielen wird auch dabei durch die Klemmhalterung eine bei alternativen Klemmtechniken bspw. durch Nägel oder Schrauben verursachte Beschädigung vermieden. Über die gezeigten Anwendungsbeispiele hinaus sind mit der erfindungsgemäßen Klemmvorrichtung auch Klemmverbindungen an zahlreichen weiteren Trägerbauformen bzw. Kombinationen derselben zu erreichen, insbesondere auch Verbindungen von Holzschalungsträgern H20 mit Stahl-Walzprofilen, z. B. Doppel-U-100-Profilen. Unabhängig von der jeweils im einzelnen gewählten Trägerbauform wird durch den beschriebenen Aufbau der Klemmvorrichtung bei kurzem Kraftfluss eine hohe Klemmkraft bei gleicher Spannkraft erreicht.

## Patentansprüche

1. Klemmvorrichtung (1), insbesondere zur Befestigung von Trägern für den Schalungsbau, aufweisend ein Umgreifelement (2) zum zumindest bereichsweisen Umgreifen eines ersten Träges und ein Andrückelement (3) zum Andrücken eines zweiten Trägers gegen den ersten Träger in einer Andrückrichtung (A), eine Längsführung, mittels der das Umgreifelement (2) und das Andrückelement (3) bezüglich der Andrückrichtung (A) mit zueinander variablem Abstand gehalten sind, und mit einer Längsverstelleinrichtung, aufweisend ein den Abstand in Andrückrichtung (A) von Umgreifelement (2) und Andrückelement (3) begrenzendes Spannelement, das entlang der Längsverstelleinrichtung unter Bereitstellung einer Andrückkraft verstellbar ist, wobei die Klemmvorrichtung durch eine Verstellung des Spannelements an eine Klemmung von Trägern mit in Andrückrichtung (A) variierenden Klemmabschnittsabmessungen anpassbar ist, **dadurch gekennzeichnet, dass** ein Federelement (10) vorgesehen ist, welches in ungeklemmtem Zustand eine Beabstandung von Umgreifelement (2) und Andrückelement (3) in dem von einer Einstellung des Spannelements abhängigen größtmöglichen Abstand (S) bewirkt.

2. Klemmvorrichtung nach Anspruch 1, **dadurch gekennzeichnet, dass** das Federelement (10) als Zylinderdruckfeder ausgebildet und zwischen Umgreifelement (2) und Andrückelement (3) angeordnet ist.

3. Klemmvorrichtung nach einem oder mehreren der vorhergehenden Ansprüche, **dadurch gekennzeichnet, dass** die Längsverstelleinrichtung eine an dem Umgreifelement (2) gehaltene Gewindestange (5) umfasst, welche das Federelement (10) und das Andrückelement (3) längsverschieblich durchsetzt, und dass das Federelement (10) in ungeklemmtem Zustand das Andrückelement (3) federnd gegen das Spannelement, insbesondere gegen eine als solches auf die Gewindestange aufgeschraubte Flügelmutter (9), andrückt.

4. Klemmvorrichtung nach Anspruch 3, **dadurch gekennzeichnet, dass** die Längsführung eine in dem Andrückelement (3) ausgebildete, von der Gewindestange (5) durchsetzte Durchgangsbohrung (8) aufweist.

5. Klemmvorrichtung nach Anspruch 3 oder Anspruch 4, **dadurch gekennzeichnet, dass** die Gewindestange (5) an einer Steckschraube, insbesondere aufweisend eine kopfseitige Taumelniete (6), vorgesehen ist.

6. Klemmvorrichtung nach einem oder mehreren der vorhergehenden Ansprüche, **dadurch gekennzeichnet, dass** das Umgreifelement (2) einen Stegabschnitt (11) mit einer Ausbuchtung (12) aufweist, welche an die Taumelniete (6) geometrisch zu deren insbesondere drehformschlüssiger Aufnahme angepasst ist.

7. Klemmvorrichtung nach einem oder mehreren der vorhergehenden Ansprüche, **dadurch gekennzeichnet, dass** das Umgreifelement (2) und das Andrückelement (3) in einer insbesondere zu der Andrückrichtung (A) senkrechten Ebene zueinander drehformschlüssig gehalten sind, wobei in einer zur Andrückrichtung (A) senkrechten Projektionsebene eine Seitenanlage (16) des Umgreifelementes (2) für den ersten Träger und eine Seitenanlage (17) des Andrückelementes (3) für den zweiten Träger in einem vorbestimmten Winkel, insbesondere in einem Winkel von 90 Grad, zueinander ausgerichtet sind.

8. Klemmvorrichtung nach einem oder mehreren der vorhergehenden Ansprüche, **dadurch gekennzeichnet, dass** das Umgreifelement (2) zumindest einen L-profilartigen Umgreifbügel (18) aufweist, dessen einer L-Schenkel unter Ausbildung einer U-profilartigen Umgreifung endseitig starr mit dem Stegabschnitt (11) verbunden ist.

9. Klemmvorrichtung nach Anspruch 8, **dadurch gekennzeichnet, dass** der stegnahe L-Schenkel des Umgreifbügels (18, 20) eine Seitenanlage (16) für den ersten Träger bildet.

10. Klemmvorrichtung nach Anspruch 8 oder Anspruch 9, **dadurch gekennzeichnet, dass** der stegabgewandte L-Schenkel des Umgreifbügels (18, 20) eine dem Stegabschnitt (11) zuweisend gegenüberliegende, zu der Andrückrichtung (A) im Wesentlichen senkrechte Umgreiffläche (19) bildet.

11. Klemmvorrichtung nach einem oder mehreren der vorhergehenden Ansprüche, **dadurch gekennzeichnet, dass** das Umgreifelement (2) zumindest einen L-profilartigen Umgreifbügel (20) aufweist, dessen einer L-Schenkel (21) gelenkig mit dem Stegabschnitt (11) verbunden ist, wobei der Umgreifbügel (20) zwischen einer U-profilartigen Umgreifstellung und einer Offenstellung, in welcher sich der gelenknahe L-Schenkel (21) des Umgreifbügels (20) zumindest anteilig oder im Wesentlichen in Richtung des Stegabschnittes (11) erstreckt, um eine Schwenkachse verschwenkbar ist.

12. Klemmvorrichtung nach Anspruch 11, **dadurch gekennzeichnet, dass** zwischen dem gelenknahen L-Schenkel (21) und dem Stegabschnitt (11) ein Drehanschlag vorgesehen ist, der den zwischen dem gelenknahen L-Schenkel (21) und dem Stegabschnitt (11) eingeschlossenen Winkel zu einem Kleinstwert von insbesondere etwa 90 Grad begrenzt

13. Klemmvorrichtung nach Anspruch 11 oder Anspruch 12, **dadurch gekennzeichnet, dass** an den Umgreifflächen (19) der Umgreifbügel (18, 20) insbesondere in Richtung der Schwenkachse verlaufende Rippen (21') vorgesehen sind.

14. Klemmvorrichtung nach einem oder mehreren der vorhergehenden Ansprüche 11, 12, 13, **dadurch gekennzeichnet, dass** die Umgreifbügel (18, 20) an dem Stegabschnitt (11) in einem Klemmquerschnitt achsensymmetrisch mit einander zuweisenden freien Enden (22') angeordnet oder bei zumindest einem schwenkbaren Umgreifbügel (20) entsprechend achsensymmetrisch anordbar sind.

15. Klemmvorrichtung nach einem oder mehreren der vorhergehenden Ansprüche, **dadurch gekennzeichnet, dass** das Andrückelement einen Stegabschnitt (22) aufweist und zumindest einen daran seitlich angeschlossenen, L-profilartigen Andrückbügel (23), dessen einer L-Schenkel (25) eine zu der Andrückrichtung (A) im Wesentlichen senkrechte Andrückfläche (26) bildet und dessen anderer L-Schenkel (27) eine Seitenanlage (17) für den zweiten Träger bildet.

16. Klemmvorrichtung nach Anspruch 15, **dadurch gekennzeichnet, dass** an den Stegabschnitt (22) des Andrückelementes (3) seitlich ein Andrückbügel (24) angeschlossen ist, der zumindest einen eine Seitenanlage (17) für den zweiten Träger bildenden Schenkel (28) und davon seitlich zueinander treppenartig niveauversetzte, zu der Andrückrichtung (A) im Wesentlichen senkrechte Andrückflächen (30) aufweist.

17. Klemmvorrichtung nach Anspruch 15 oder 16, **dadurch gekennzeichnet, dass** die niveauversetzten Andrückflächen (30) im Bodenbereich von U-profilartigen Vertiefungen und/ oder stirnseitig von Schenkeln (28) angeordnet sind.

18. Klemmvorrichtung nach einem oder mehreren der vorhergehenden Ansprüche, **dadurch gekennzeichnet, dass** ein eine Seitenanlage (17) für den zweiten Träger bildender Schenkel (27) des Andrückelementes (3) in einer zur Andrückrichtung (A) senkrechten Ebene insbesondere im Bereich der Ausbuchtung (12) in drehformschlüssiger Anlage mit dem Stegabschnitt (11) des Umgreifelements (2) gehalten ist.

19. Klemmvorrichtung nach einem oder mehreren der vorhergehenden Ansprüche, **dadurch gekennzeichnet, dass** das Andrückelement (3) den Stegabschnitt (11) des Umgreifelements (2) insbesondere im Bereich der Ausbuchtung (12) U-förmig umgreift.

20. Klemmvorrichtung nach einem oder mehreren der vorhergehenden Ansprüche, **dadurch gekennzeichnet, dass** das dem Spannelement abgewandte Ende der Gewindestange (5) geometrisch an einen formschlüssigen Eingriff in eine T-Nut eines Trägers angepasst ist.

21. Klemmvorrichtung nach einem oder mehreren der vorhergehenden Ansprüche, **dadurch gekennzeichnet, dass** das Umgreifelement (2) und/oder das Andrückelement (3) aus Aluminiumstrangpressprofil hergestellt sind.

## Claims

1. Clamping device (1), in particular for fastening beams for concrete formwork, comprising a gripping element (2) for gripping a first beam at least in regions and a pressure element (3) for pressing a second beam against the first beam in a pressure direction (A), a longitudinal guide, by means of which the gripping element (2) and the pressure element (3) are held with variable spacing from one another in the pressure direction (A), and comprising a longitudinal adjustment apparatus comprising a tensioning element which defines the spacing in the pressure direction (A) between the gripping element (2) and the pressure element (3) and can be adjusted along the longitudinal adjustment apparatus by applying pressure, it being possible for the clamping device to be adapted to clamping beams having clamping portion dimensions that vary in the pressure direction (A) by adjusting the tensioning element, **characterised in that** a spring element (10) is provided which, when unclamped, causes the gripping element (2) and the pressure element (3) to be spaced apart by the largest possible distance (S), which depends on how the tensioning element is set.

2. Clamping device according to claim 1, **characterised in that** the spring element (10) is a cylindrical compression spring and is arranged between the gripping element (2) and the pressure element (3).

3. Clamping device according to one or more of the preceding claims, **characterised in that** the longitudinal adjustment apparatus comprises a threaded rod (5) which is held on the gripping element (2) and penetrates the spring element (10) and the pressure element (3) in a longitudinally displaceable manner, and **in that** the spring element (10), when unclamped, resiliently presses the pressure element (3) against the tensioning element, in particular against a wing nut (9) which is screwed onto the threaded rod.

4. Clamping device according to claim 3, **characterised in that** the longitudinal guide comprises a through hole (8) which is formed in the pressure element (3) and is penetrated by the threaded rod (5).

5. Clamping device according to either claim 3 or claim 4, **characterised in that** the threaded rod (5) is provided on a plug screw, more particularly comprising a wobble rivet (6) on the top.

6. Clamping device according to one or more of the preceding claims, **characterised in that** the gripping element (2) comprises a web portion (11) comprising a protrusion (12), which is adapted to the dimensions of the recess, which is in particular rotatably interlocking, in the wobble rivet (6).

7. Clamping device according to one or more of the preceding claims, **characterised in that** the gripping element (2) and the pressure element (3) are held relative to one another in a rotatably interlocking manner in a plane which is in particular perpendicular to the pressure direction (A), a side face (16) of the gripping element (2) for the first beam and a side face (17) of the pressure element (3) for the second beam, in a plane of projection that is perpendicular to the pressure direction (A), being oriented at a specific angle, more particularly at an angle of 90 degrees, relative to one another.

8. Clamping device according to one or more of the preceding claims, **characterised in that** the gripping element (2) comprises at least one L-shaped gripping bracket (18), one leg of the L shape of which bracket is rigidly connected at its end to the web portion (11), thus gripping in a U shape.

9. Clamping device according to claim 8, **characterised in that** the leg of the L shape of the gripping bracket (18, 20) that is close to the web forms a side face (16) for the first beam.

10. Clamping device according to either claim 8 or claim 9, **characterised in that** the leg of the L shape of the gripping bracket (18, 20) that is remote from the web forms an opposing gripping surface (19) which faces the web portion (11) and is substantially perpendicular to the pressure direction (A).

11. Clamping device according to one or more of the preceding claims, **characterised in that** the gripping element (2) comprises at least one L-shaped gripping bracket (20), a leg (21) of the L shape of which bracket is articulated to the web portion (11), it being possible for the gripping bracket (20) to pivot about a pivot axis between a U-shaped gripping position and an open position in which the leg (21) of the L shape of the gripping bracket (20) that is close to the articulation extends at least in part or substantially in the direction of the web portion (11).

12. Clamping device according to claim 11, **characterised in that** a rotating stop is provided between the leg (21) of the L shape that is close to the articulation and the web portion (11), which stop limits the angle enclosed by the leg (21) of the L shape that is close to the articulation and the web portion (11) to a minimum value of in particular approximately 90 degrees.

13. Clamping device according to either claim 11 or claim 12, **characterised in that** ribs (21') which extend in particular towards the pivot axis are provided on the gripping surfaces (19) of the gripping bracket (18, 20).

14. Clamping device according to one or more of preceding claims 11, 12 and 13, **characterised in that** the free ends (22') of the gripping brackets (18, 20) which face one another are axisymmetrically arranged on the web portion (11) in a clamping cross section or, in the case of at least one pivotal gripping bracket (20), can be accordingly axisymmetrically arranged.

15. Clamping device according to one or more of the preceding claims, **characterised in that** the pressure element comprises a web portion (22) and at least one L-shaped pressure bracket (23) which is laterally connected to said web portion, one leg (25) of the L shape of which bracket forms a pressure surface (26) that is substantially perpendicular to the pressure direction (A) and the other leg (27) of the L shape of which bracket forms a side face (17) for the second beam.

16. Clamping device according to claim 15, **characterised in that** a pressure bracket (24) is laterally connected to the web portion (22) of the pressure element (3), which bracket comprises at least one leg (28) which forms a side face (17) for the second beam and pressure surfaces (30) which are substantially perpendicular to the pressure direction (A) and are laterally offset from said leg at different levels in a step-like manner.

17. Clamping device according to either claim 15 or claim 16, **characterised in that** the pressure surfaces (30) which are offset at different levels are arranged in the base region of U-shaped indentations and/or on the end faces of legs (28).

18. Clamping device according to one or more of the preceding claims, **characterised in that** a leg (27) of the pressure element (3) which forms a side face (17) for the second beam is held in rotatably interlocking contact with the web portion (11) of the gripping element (2) in a plane which is perpendicular to the pressure direction (A), in particular in the region of the protrusion (12).

19. Clamping device according to one or more of the preceding claims, **characterised in that** the pressure element (3) grips the web portion (11) of the gripping element (2) in a U shape, in particular in the region of the protrusion (12).

20. Clamping device according to one or more of the preceding claims, **characterised in that** the end of the threaded rod (5) that is remote from the tensioning element is adapted to the dimensions of an interlocking engagement in a T-slot in a beam.

21. Clamping device according to one or more of the preceding claims, **characterised in that** the gripping element (2) and/or the pressure element (3) are made of an aluminium extruded profile.

## Revendications

1. Dispositif de serrage (1), en particulier pour la fixation de poutres pour la construction de coffrages, comportant un élément d'enserrage (2) pour enserrer au moins par endroit une première poutre et un élément presseur (3) pour exercer une pression sur une deuxième poutre contre la première poutre selon une direction de pression (A), un guidage longitudinal, au moyen duquel l'élément d'enserrage (2) et l'élément presseur (3) sont maintenus par rapport à la direction de pression (A) à une distance variable l'un par rapport à l'autre, et un dispositif de réglage longitudinal, comportant un élément de tension limitant la distance selon la direction de pression (A) entre l'élément d'enserrage (2) et l'élément presseur (3), ajustable le long du dispositif de réglage longitudinal lorsqu'une force de pression est appliquée, où le dispositif de serrage est adaptable par réglage de l'élément de tension par serrage des poutres en faisant varier les dimensions de section de serrage selon la direction de pression (A), **caractérisé en ce qu'**il est prévu un élément de ressort (10), lequel entraine dans un état desserré un écartement de l'élément d'enserrrage (2) et de l'élément de pression (3), où l'écart (S), dépendant de la position de l'élément de tension, est le plus grand possible.

2. Dispositif de serrage selon la revendication 1, **caractérisé en ce que** l'élément de ressort (10) est un ressort de compression cylindrique, et est logé entre l'élément d'enserrage (2) et l'élément de pression (3).

3. Dispositif de serrage selon une ou plusieurs des revendications précédentes, **caractérisé en ce que** le dispositif de réglage longitudinal comprend une tige filetée (5) fixée à l'élément d'enserrage (2), laquelle traverse l'élément de ressort (10) et l'élément de pression (3) d'une manière mobile longitudinalement, et **en ce que** l'élément de ressort (10) dans un état desserré presse de manière élastique l'élément de pression (3) contre l'élément de tension, en particulier contre un écrou papillon (9) vissé comme tel sur la tige filetée.

4. Dispositif de serrage selon la revendication 3, **caractérisé en ce que** le guidage longitudinal comprend un trou traversant (8) formé dans l'élément de pression (3) et traversé par la tige filetée (5).

5. Dispositif de serrage selon la revendication 3 ou la revendication 4, **caractérisé en ce que** la tige filetée (5) est prévue sur un boulon, comprenant en particulier côté tête un rivet orbital (6).

6. Dispositif de serrage selon une ou plusieurs des revendications précédentes, **caractérisé en ce que** l'élément d'enserrage (2) comprend une portion de liaison (11) présentant un renflement (12), ledit renflement étant géométriquement adapté au rivet orbital (6) pour y loger celui-ci, en particulier par complémentarité de forme.

7. Dispositif de serrage selon l'une ou plusieurs des revendications précédentes, **caractérisé en ce que** l'élément d'enserrage (2) et l'élément de pression (3) sont maintenus l'un à l'autre par complémentarité de forme dans un plan vertical, en particulier selon la direction de pression (A), où un logement latéral (16) de l'élément d'enserrage (2) pour la première poutre et un logement latéral (17) de l'élément de pression (3) pour la deuxième poutre sont orientés dans un plan de projection perpendiculaire à la direction de pression (A) selon un angle prédéterminé, en particulier selon un angle de 90 degrés.

8. Dispositif de serrage selon l'une ou plusieurs des revendications précédentes, **caractérisé en ce que** l'élément d'enserrage (2) comprend au moins un étrier d'enserrage (18) profilé en L, dont une patte en L est étroitement fixée du côté de son extrémité à la portion de liaison (11) afin de former un enserrage profilé en U.

9. Dispositif de serrage selon la revendication 8, **caractérisé en ce que** la patte en L de l'étrier d'enserrage (18, 20) proche de la liaison forme un logement latéral (16) pour la première poutre.

10. Dispositif de serrage selon la revendication 8 ou 9, **caractérisé en ce que** la patte en L de l'étrier d'enserrage (18, 20) éloignée de la liaison forme une surface d'enserrage (19) substantiellement perpendiculaire à la direction de pression (A) s'étendant en regard de la portion de liaison (11).

11. Dispositif de serrage selon l'une ou plusieurs des revendications précédentes, **caractérisé en ce que** l'élément d'enserrage (2) comprend au moins un étrier d'enserrage (20) profilé en L, dont une patte en L (21) est liée à la portion de liaison (11) de manière articulée, où l'étrier d'enserrage (20) peut pivoter autour d'un axe de pivotement entre une position d'enserrage profilée en U et une position ouverte, dans laquelle la patte en L (21) de l'étrier d'enserrage (20) proche de la liaison s'étend au moins en partie ou substantiellement en direction de la portion de liaison (11).

12. Dispositif de serrage selon la revendication 11, **caractérisé en ce qu'**une butée de rotation est prévue entre la patte en L (21) proche de l'articulation et la portion de liaison (11), ladite butée de rotation formant un angle défini, en particulier d'une valeur minimale de 90 degrés entre la patte en L (21) proche de l'articulation et la portion de liaison (11).

13. Dispositif de serrage selon la revendication 11 ou 12, **caractérisé en ce qu'**il est prévu des nervures (21') s'étendant sur la surface d'enserrement (19) des étriers d'enserrage (18, 20), en particulier en direction de l'axe de pivotement.

14. Dispositif de serrage selon l'une ou plusieurs des revendications 11, 12, 13, **caractérisé en ce que** les étriers d'enserrage (18, 20) sont disposés sur la portion de liaison (11) dans une section transversale de serrage en symétrie axiale avec les extrémités libres (22') en regard l'une de l'autre, ou agencés avec au moins un étrier d'enserrage (20) pivotant en correspondance selon une symétrie axiale.

15. Dispositif de serrage selon l'une ou plusieurs des revendications précédentes, **caractérisé en ce que** l'élément presseur comprend une portion de liaison (22) et au moins un étrier presseur (23) profilé en L rattaché à celle-ci par un côté, dont une patte en L (25) forme une surface de pression (26) substantiellement perpendiculaire à la direction de pression (A) et dont une autre patte en L (27) forme un logement latéral (17) pour la deuxième poutre.

16. Dispositif de serrage selon la revendication 15, **caractérisé en ce qu'**un étrier presseur (24) est rattaché par le côté à la portion de liaison (22) de l'élément presseur (3), ledit étrier presseur comprenant une patte (28) formant un logement latéral (17) pour la deuxième poutre, et à côté et étagée en escalier, une surface d'appui (30) substantiellement perpendiculaire à la direction de pression (A).

17. Dispositif de serrage selon la revendication 15 ou 16, **caractérisé en ce que** les surfaces d'appui (30) étagées sont disposées au fond de cavités profilées en U et/ou du côté frontal des pattes (28).

18. Dispositif de serrage selon l'une ou plusieurs des revendications précédentes, **caractérisé en ce qu'**une patte (27) de l'élément presseur (3) formant un logement latéral (17) pour la deuxième poutre est maintenue dans un plan perpendiculaire à la direction de pression (A), en particulier à proximité du renflement (12) en complémentarité de forme avec la portion de liaison (11) de l'élément d'enserrage (2).

19. Dispositif de serrage selon l'une ou plusieurs des revendications précédentes, **caractérisé en ce que** l'élément presseur (3) enserre la portion de liaison (11) de l'élément d'enserrage (2) de manière à former un U, en particulier à proximité du renflement (12).

20. Dispositif de serrage selon l'une ou plusieurs des revendications précédentes, **caractérisé en ce que** l'extrémité éloignée de l'élément de tension de la tige filetée (5) est géométriquement adaptée pour coopérer par complémentarité de forme avec une rainure en forme de T d'une poutre.

21. Dispositif de serrage selon l'une ou plusieurs des revendications précédentes, **caractérisé en ce que** l'élément d'enserrage (2) et/ou l'élément presseur (3) sont fabriqués à partir de profilés d'aluminium extrudés.
